# EUROPEAN PATENT SPECIFICATION

(11) **EP 3 535 571 B1**
(45) Date of publication and mention of the grant of the patent: **30.12.2020**
(21) Application number: 17795026.8
(22) Date of filing: 02.11.2017
(51) Int. Cl.: G01N 27/414

(54) **ISFET ARRAY**
ISFET-ARRAY
ARRAY DE ISFET

(30) Priority: 07.11.2016 GB 201618749
(43) Date of publication of application: 11.09.2019
(73) Proprietor: Dnae Diagnostics Limited, London W12 7SB (GB)
(72) Inventor: GARNER, David Michael, London W12 7SB (GB); MOHTASHEMI, Darya, London SW19 8ED (GB); POON, Tuck Weng, Fleet Hampshire GU51 4EY (GB)
(74) Representative: Stratagem IPM Limited
(86) International application number: PCT/GB2017/053304
(87) International publication number: WO 2018/083479

(56) References cited:
- US-A1- 2012 265 474
- US-A1- 2013 321 044
- US-A1- 2016 245 777
- GARNER D M ET AL: "A multichannel DNA SoC for rapid point-of-care gene detection", SOLID-STATE CIRCUITS CONFERENCE DIGEST OF TECHNICAL PAPERS (ISSCC), 2010 IEEE INTERNATIONAL, IEEE, PISCATAWAY, NJ, USA, 7 February 2010 (2010-02-07), pages 492-493, XP031649926, ISBN: 978-1-4244-6033-5
- LAIFI ANOUAR ET AL: "A 96 dB SNDR current-mode continuous-time [Delta][Sigma] modulator for electrochemical sensor arrays", 2015 22ND INTERNATIONAL CONFERENCE MIXED DESIGN OF INTEGRATED CIRCUITS & SYSTEMS (MIXDES), DEPARTMENT OF MICROELECTRONICS AND COMPUTER SCIENCE, LODZ UNIVERISTY OF TECHNOLOGY, 25 June 2015 (2015-06-25), pages 239-242, XP033196504, DOI: 10.1109/MIXDES.2015.7208518 [retrieved on 2015-08-17]

## Description

This invention relates to improvements in or relating to the detection of chemical and biological reactions in an electrolyte solution, using semiconductor-based devices; specifically, Ion-Sensing Field Effect Transistors (ISFETS).

It is well known to provide an array of pixels for detecting chemical and biological reactions. The sensors used in such arrays are semiconductor devices and a great deal of interest and research has gone into the use of ISFET devices. ISFETs can be used to measure the hydrogen ion concentration or pH of an electrolyte solution. ISFETs are popular because they can be fabricated within a conventional Complementary Metal Oxide Semiconductor (CMOS) technology, resulting in large array of pH sensors alongside high resolution data acquisition circuits.

In order to measure and record these reactions, it is well known to divide the array into columns of pixels and to provide an Analogue to Digital Converter (ADC) for each column. This is known as column parallel architecture and it has served the industry well for many years. The provision of a single ADC for each column reduces the hardware requirement as the ADC is configured to sample each of the pixels within a column, or multiple columns, sequentially thereby building up, over time, an output from each pixel.

Document US-2012/0265474 discloses an array of ISFET with an ADC for each ISFET for converting sensed values to digital form in parallel and saving them into a local memory. The memory can be read by addressing row and column.

It is against this background that the present invention has arisen.

According to the present invention there is provided a chip comprising: an array of pixels wherein each pixel comprises: an ISFET sensor; and an ADC and a clocking arrangement comprising a first clock signal common to all of the pixels in the array, for sampling the ISFET signal; and a second clock signal provided sequentially across the array, for conversion of the signal.

The provision of a first clock signal that is common to all of the pixels enables the simultaneous sampling of the analogue ISFET signal in each of the pixels.

The provision of an ADC within each pixel allows the analogue to digital conversion to take place within the pixel itself, rather than outside the pixel, as dictated by the column parallel architecture which forms the status quo within the technical field.

The provision of an ADC within each pixel allows simultaneous sampling of the analogue signal generated by all of the ISFETs within the array and conversion of this into a digital signal that can be output from each pixel.

The provision of an ADC within each pixel means that space does not need to be allocated on the chip for ADCs outside the sensor array. The provision of the ADC within each pixel effectively frees up space on the chip in comparison with column parallel architecture.

A further advantage of the provision of the ADC within the pixel, is that the array is fully scalable.

The ADC is a sigma delta ADC. The sigma delta ADC is advantageous because it provides a higher resolution than other ADCs.

The sigma delta ADC may be a single ended first order sigma delta ADC which has the advantage of providing the smallest available architecture therefore enabling the invention to be implemented within the minimum possible area. Alternatively, the sigma delta ADC may be a second, third, fourth, fifth or sixth order sigma delta ADC.

Each pixel may further comprise bias control to control the amount of current in the pixel. The provision of the bias control within the pixel, rather than outside of the pixel is for noise control purposes as the positioning of the bias control within the pixel prevents noise from propagating from one pixel to the next through the bias control.

Each pixel may have an area in the region of 100µm x 100µm, or 50µm x 50µm or 25µm x 25µm, or 10µm x 10µm or even 2.5µm x 2.5µm. The pixel may be square, or it may be rectangular. In order to increase the packing density of the pixels, hexagonal pixels may be used.

The array may comprise many pixels. There may be in the region of 4000 pixels, or 6 million or even 100 million pixels. For example, the array may be 40x96 pixels or 256x160. Because the pixels each include an ADC, they are fully scalable and therefore can be formed into an array of any practical size depending on the application for which the array will be used.

Each pixel may further comprise a switch configured to control the flow of data from the pixel onto a column on which each pixel is located.

The chip may be further configured to comprise control signals for each pixel that enable the ISFET and the ADC within each pixel to be switched on only when required. This provides considerable reduction in the power required to operate the array and consequent efficiency improvements in terms of unwanted heat within the array.

Furthermore, according to the present invention there is provided a device comprising: an array of wells each configured to receive a biological or chemical substance, wherein the array of wells is provided over a chip as discussed above.

This configuration provides considerable advantages over the column parallel architecture which forms the state of the art in this field, in that it enables the sampling of the ISFET signals from all pixels simultaneously. When the wells contain biological or chemical substances in which reactions may be taking place, the sampling of all of the ISFET signals at the same time ensures that the reactions taking place within the wells are all at the same point when the sample is taken. There is therefore no need to make allowances for differences in sample time when all of the samples have been taken at the same time.

Once the sampling of all of the ISFETs has occurred simultaneously, then the conversion of the signal to a digital form may be staggered. If it is staggered then the entire pixel array is sampled at the same time whilst minimising the peak current consumption of the array.

The invention will now be further and more particularly described, by way of example only, and with reference to the accompanying drawings, in which:
Figure 1 shows a pixel block diagram;
Figure 2 shows the connectivity of control signals and data output from an exemplary four pixels;
Figure 3 is a pixel timing diagram;
Figure 4 is an RVALID timing diagram; and
Figure 5 is a sigma delta ADC block diagram.

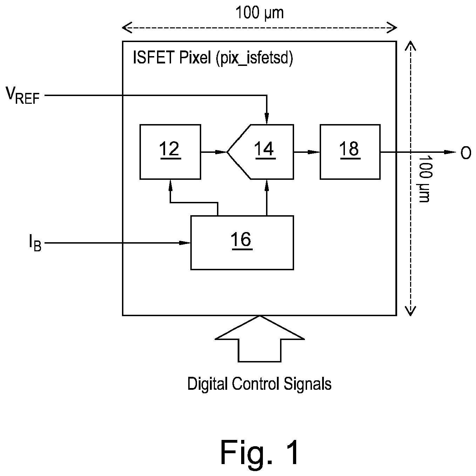

Figure 1 is a pixel block diagram showing a single 100µm square pixel 10 which contains an ISFET 12, which is directly connected to a Sigma Delta ADC 14. The Sigma Delta ADC 14 is provided with ADC reference voltages V_{REF} and is configured to perform the conversion of the analogue signal from the ISFET 12 into a digital bitstream.

The pixel 10 also includes bias control 16 which receives a bias current I_{B} from outside the pixel 10. The bias current I_{B} is in the region of 0.1µA to 100µA, for example 2µA and is used to provide bias control to the ISFET 12 and the Sigma Delta ADC 14.

The pixel 10 also includes a switch 18 which is configured to control the data output O from the pixel 10. When the switch 18 is activated, it connects the data output O from the Sigma Delta ADC 14 to a column line which is provided outside the pixel 10.

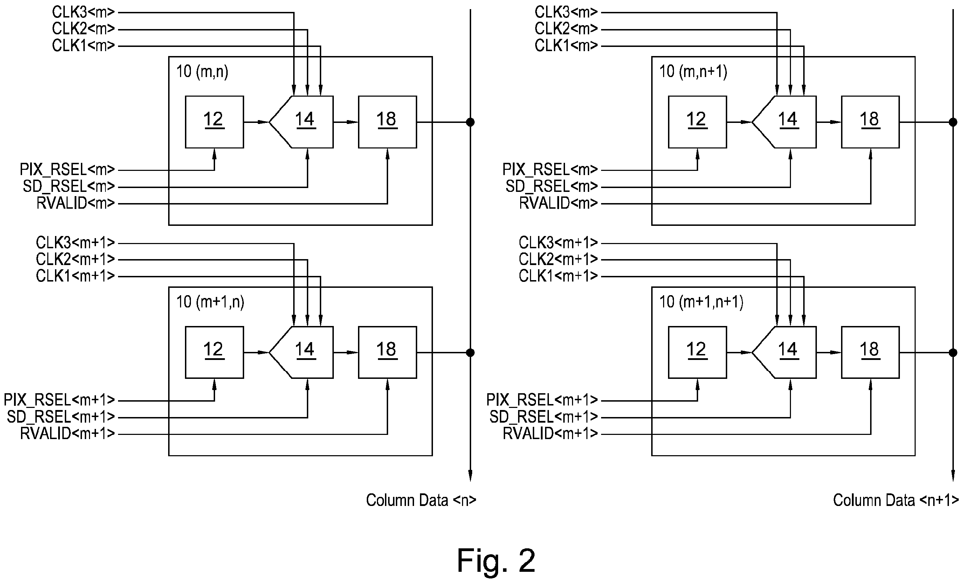

Figure 2 shows the connectivity of the control signals and data output for an exemplary set of four pixels 10. For reasons of clarity, the bias control has been omitted. The pixels 10 are each allocated a row and column number. The data outputs of all of the pixels 10 in each column n, n+1, n+2 etc. are connected. Each row of pixels is enumerated m, m+1, m+2 etc. A switched capacitor implementation of a single-ended first order sigma delta modulator is used as the ADC. The ISFET 12 is a source follower NMOS floating gate transistor with its bulk tied to its source. In an alternative embodiment, not illustrated in the accompanying drawings, the single-ended first order sigma delta modulator is provided in a continuous time specification.

In the illustrated embodiment, the main control signals for the pixel 10 are: CLK1, CLK2, CLK3, PIX_RSEL, SD_RSEL, and RVALID. CLK1 is used to sample the output from all of the ISFETs 12, while CLK2 and CLK3 are used to do the ADC conversion. PIX_RSEL and SD_RSEL are the row enable signals for the ISFETs 12 and Sigma Delta ADCs 14, respectively. The data from the SD ADC 14 is arranged in columns and is controlled by the corresponding RVALID signal, which indicates when data is valid on each row. To reduce power consumption, the pixels 10 are only turned on when needed.

One advantage of integrating the Sigma Delta ADC 14 into every pixel 10 is that the entire pixel array 100 can be sampled at the same time, therefore capturing the output of all the ISFETs 12 at the same point in time for every frame capture. This is a very useful feature for when it comes to processing the data, as allowances do not need to be made for the difference in time capture of the samples when a column parallel architecture is used and the array is sampled row by row. To achieve simultaneous sampling of the entire array illustrated in Figure 2, CLK1 needs to be common to all the pixels. However, as CLK2 and CLK3 are only used to do the ADC conversion, they can be staggered between all the pixels 10 to reduce peak current consumption.

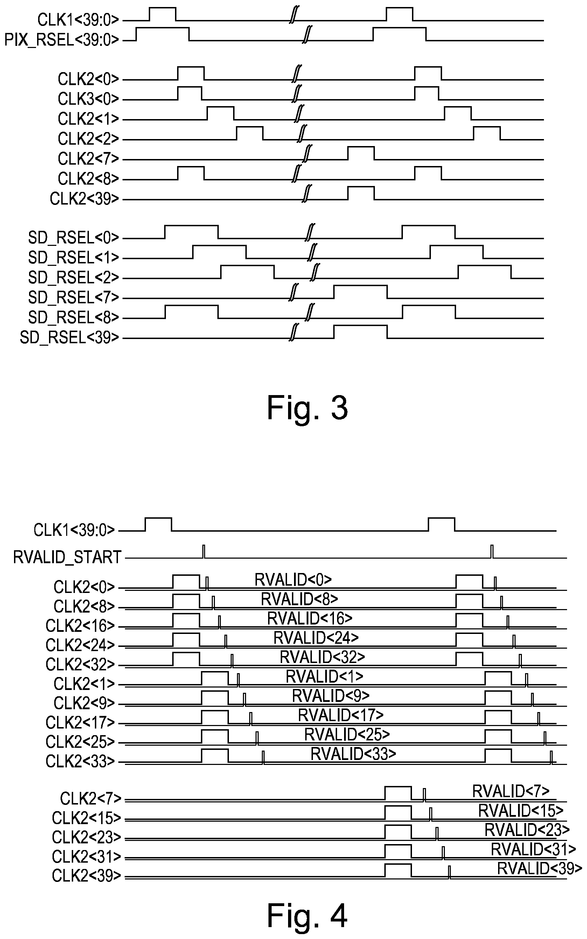

Figure 3 is a timing diagram of the control signals. The ISFETs 12 are all sampled at the same time via CLK1<39:0>. Subsequently, the analogue to digital conversion takes place in a staggered fashion via CLK2<39:0> and CLK3<39:0>. The only difference between CLK2<m> and CLK3<m> is that the falling edge of CLK3<m> occurs slightly before the falling edge of CLK2<m> (for simplicity, only CLK3<0> has been shown in Figure 3). The pattern of CLK2 and CLK3 is repeated every 8th row as there is insufficient time to stagger all 40 rows within an oversampling period.

To reduce power consumption, the ISFET 12 and ADC 14 blocks within the pixels 10 are only turned on when needed. This is achieved by turning on the corresponding PIX_RSEL and SD_RSEL signals in advance of CLK1 and CLK2 respectively.

With reference to Figure 4, as there is only one data pin for every column, RVALID is used to latch the bitstream for each row of the pixel array to the output pin. Data for each pixel is only valid when RVALID is set high. RVALID_START is used to indicate the start of a new frame. All data collected within 2 RVALID_START pulses belong to the same frame.

When the RVALID signals for all the rows are LOW, the column data line is pulled to digital ground (GNDD) by a pull down resistor. This prevents the input to the digital controller from floating to an indeterminate voltage.

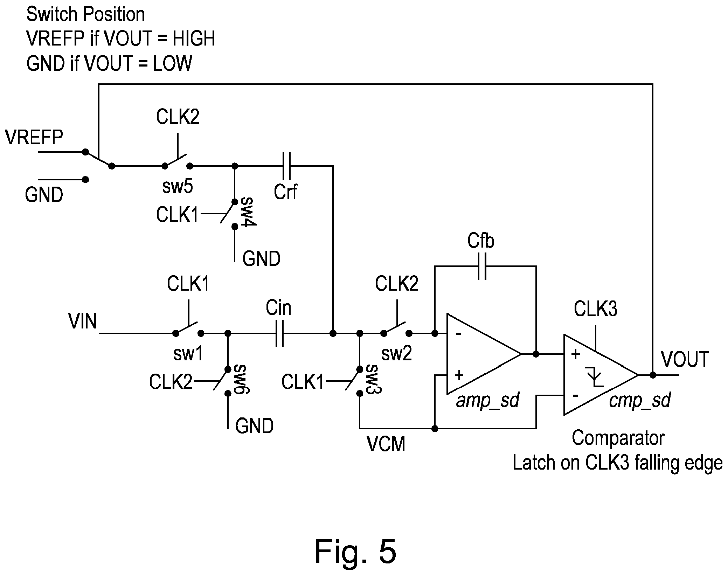

A block diagram of a single-ended first order sigma delta ADC is shown in Figure 5. This ADC is based on a switched capacitor network and operates at an oversampled frequency of 30kHz. Assuming an oversampling ratio (OSR) of 512, the downsampled sample rate is thus just under 58.6Hz and the maximum signal bandwidth that recovered is no more than half that. In combination with a low-pass decimation filter with a cut-off frequency of the signal bandwidth of interest, this results in the noise present before the sampling being folded down and then effectively eliminated by the low-pass decimation filter.

As will be apparent from Figure 5, the negative reference voltage is set to the analogue ground (GNDA) to reduce the number of signals going into the pixel 10. Both the positive reference voltage, VREFP, and the common mode reference voltage, VCM, are buffered within each pixel 10 to reduce noise coupling across the rows of pixels 10 in the array 100.

It will further be appreciated by those skilled in the art that although the invention has been described by way of example with reference to several embodiments it is not limited to the disclosed embodiments and that alternative embodiments could be constructed without departing from the scope of the invention as defined in the appended claims.

## Claims

1. A chip comprising:
an array of pixels wherein each pixel comprises:
a ISFET sensor; and
a sigma delta ADC, and
a clocking arrangement comprising:
a first clock signal common to all of the pixels in the array, for sampling the ISFET signal; and
a second clock signal provided sequentially across the array, for conversion of the signal.

2. The chip according to claim 1 wherein the sigma delta ADC is a single ended first order sigma delta ADC.

3. The chip of any one of claims 1 to 2 wherein each pixel further comprises bias control.

4. The chip of any one of claims 1 to 3, wherein each pixel has an area in the region of 100µm x 100µm.

5. The chip of any one of claims 1 to 4, wherein the array comprises in the region of 4000 pixels.

6. The chip of any one of claims 1 to 5, wherein each pixel further comprises a switch configured to control the flow of data from the pixel.

7. The chip according to any one of the preceding claims, further comprising control signals for each pixel that enable the ISFET and the ADC within each pixel to be switched on only when required.

8. A device comprising an array of wells each configured to receive a biological or chemical substance, wherein the array of wells is provided over a chip according to any one of the preceding claims.

9. The device according to claim 8, wherein each well covers more than one pixel.

## Patentansprüche

1. Chip, umfassend:
ein Array von Pixeln, wobei jedes Pixel umfasst:
einen ISFET-Sensor und
einen Sigma-Delta-ADC, und
eine Takterzeugungsanordnung, umfassend:
ein erstes Taktsignal, das allen Pixeln in dem Array gemein ist, zum Abtasten des ISFET-Signals und
ein zweites Taktsignal, das sequentiell über das Array vorgesehen wird, zur Umwandlung des Signals.

2. Chip nach Anspruch 1, wobei der Sigma-Delta-ADC ein Eintakt-Sigma-Delta-ADC erster Ordnung ist.

3. Chip nach einem der Ansprüche 1 bis 2, wobei jedes Pixel weiterhin Bias-Steuerung umfasst.

4. Chip nach einem der Ansprüche 1 bis 3, wobei jedes Pixel eine Fläche im Bereich von 100 µm x 100 µm aufweist.

5. Chip nach einem der Ansprüche 1 bis 4, wobei das Array im Bereich von 4000 Pixeln umfasst.

6. Chip nach einem der Ansprüche 1 bis 5, wobei jedes Pixel weiterhin einen Switch umfasst, der dazu konfiguriert ist, den Datenfluss von dem Pixel zu steuern.

7. Chip nach einem der vorhergehenden Ansprüche, weiterhin umfassend Steuersignale für jedes Pixel, die ermöglichen, dass der ISFET und der ADC innerhalb jedes Pixels nur bei Bedarf eingeschaltet werden.

8. Vorrichtung, umfassend ein Array von Wells, die jeweils dazu konfiguriert sind, eine biologische oder chemische Substanz aufzunehmen, wobei das Array von Wells über einem Chip nach einem der vorhergehenden Ansprüche vorgesehen ist.

9. Vorrichtung nach Anspruch 8, wobei jedes Well mehr als ein Pixel abdeckt.

## Revendications

1. Puce comprenant :
un réseau de pixels, chaque pixel comprenant :
un capteur de transistor à effet de champ sensible aux ions (ISFET) ; et
un convertisseur analogique-numérique (CAN) sigma delta, et
un agencement d'horloge comprenant :
un premier signal d'horloge commun à tous les pixels dans le réseau, destiné à échantillonner le signal ISFET ; et
un second signal d'horloge fourni séquentiellement à travers le réseau, destiné à la conversion du signal.

2. Puce selon la revendication 1, ledit CAN sigma delta étant un CAN sigma delta du premier ordre asymétrique.

3. Puce selon l'une quelconque des revendications 1 à 2, chaque pixel comprenant en outre une commande de polarisation.

4. Puce selon l'une quelconque des revendications 1 à 3, chaque pixel possédant une aire d'environ 100 µm x 100 µm.

5. Puce selon l'une quelconque des revendications 1 à 4, ledit réseau comprenant environ 4 000 pixels.

6. Puce selon l'une quelconque des revendications 1 à 5, chaque pixel comprenant en outre un commutateur conçu pour commander le flux de données provenant du pixel.

7. Puce selon l'une quelconque des revendications précédentes, comprenant en outre des signaux de commande pour chaque pixel qui permettent à l'ISFET et au CAN à l'intérieur de chaque pixel d'être activés uniquement lorsque cela est nécessaire.

8. Dispositif comprenant un réseau de puits chacun configuré pour recevoir une substance biologique ou chimique, ledit réseau de puits étant disposé sur une puce selon l'une quelconque des revendications précédentes.

9. Dispositif selon la revendication 8, chaque puits couvrant plus d'un pixel.
